# EUROPEAN PATENT APPLICATION

(11) **EP 3 978 296 A1**
(43) Date of publication of application: **06.04.2022**
(21) Application number: 20200007.1
(22) Date of filing: 05.10.2020
(51) Int. Cl.: B60K 37/06, B60R 1/00, B60R 11/04

(54) **MOTOR VEHICLE DISPLAY SYSTEM AND METHOD**

(71) Applicant: Continental Automotive GmbH, 30165 Hannover (DE)
(72) Inventor: FRIEBE, Markus, 339780 Singapore (SG); GOTUR, Chetan, 339780 Singapore (SG); PRABHAKAR, Pavan Nag, 339780 Singapore (SG); RANJAN, Abhishek, 339780 Singapore (SG); SINGH, Rohit, 339780 Singapore (SG)
(74) Representative: Continental Corporation

(57) **Abstract**

A motor vehicle display system (100) comprising: a vehicular information retriever (110) configured to retrieve vehicular information of a motor vehicle (140) ; and an image stream selector (120) configured to select an image stream source from at least two image stream sources based on the vehicular information retrieved, in order to display an image stream from the image stream source selected by the image stream selector (120).

## Description

### FIELD OF THE INVENTION

The invention relates to a motor vehicle display system and a corresponding motor vehicle display method.

### BACKGROUND

Presently, motor vehicles may comprise more than one camera to monitor their surroundings. For instance, a motor vehicle may comprise a front camera directed outwards from a front of the motor vehicle, a rear camera directed outwards from a rear of the motor vehicle, a left camera directed outwards from a left side of the motor vehicle and a right camera directed outwards from a right side of the motor vehicle. Images captured by the cameras may be streamed from the cameras to a display within the motor vehicle. However, it is difficult to select an appropriate image stream from one of the cameras to display.

### SUMMARY

An objective is to provide a motor vehicle display system that is able to help select an appropriate image stream from one image stream source from more than one image stream source to display, or a motor vehicle display method for helping to select an appropriate image stream from one image stream source from more than one image stream source to display.

According to a first aspect of the invention, there is provided a motor vehicle display system comprising: a vehicular information retriever configured to retrieve vehicular information of a motor vehicle; and an image stream selector configured to select an image stream source from at least two image stream sources based on the vehicular information retrieved, in order to display an image stream from the image stream source selected by the image stream selector.

One advantage of the motor vehicle display system is that the motor vehicle display system is able to select an appropriate image stream to display. Another advantage is that a driver of the motor vehicle does not have to manually select which image stream to display, which may be dangerous if the driver is selecting while driving.

Moreover, the motor vehicle display system is distinguishable from a device that is configured to display an image stream from a rear camera when a reverse gear is engaged. In fact, the device is not configured to select one image stream from a possible multiple image streams but is programmed to display the image stream from the rear camera when the reverse gear is engaged.

Optionally, the vehicular information retriever is configured to retrieve map information; and the image stream selector is configured to select the image stream source from the at least two image stream sources based on the map information retrieved, in order to display the image stream from the image stream source selected by the image stream selector.

One advantage of the motor vehicle display system is that the motor vehicle display system is able to select an appropriate image stream to display based on map information.

Optionally, the vehicular information retriever is configured to retrieve localisation information of the motor vehicle; and the image stream selector is configured to select the image stream source from the at least two image stream sources based on the localisation information retrieved, in order to display the image stream from the image stream source selected by the image stream selector.

One advantage of the motor vehicle display system is that the motor vehicle display system is able to select an appropriate image stream to display based on localisation information.

Optionally, the vehicular information retriever is configured to retrieve vehicular dynamics information of the motor vehicle; and the image stream selector is configured to select the image stream source from the at least two image stream sources based on the vehicular dynamics information retrieved, in order to display the image stream from the image stream source selected by the image stream selector.

One advantage of the motor vehicle display system is that the motor vehicle display system is able to select an appropriate image stream to display based on vehicular dynamics information.

Optionally, the image stream selector is configured to select a respective portion of each image from the image stream from the image stream source selected by the image stream selector, in order to display the respective portion of each image from the image stream from the image stream source selected by the image stream selector.

One advantage of the motor vehicle display system is that the motor vehicle display system is able to select an appropriate portion of each image from the image stream to display.

Optionally, the image stream selector is configured to select a camera image stream source from at least two camera image stream sources based on the vehicular information retrieved, in order to display a camera image stream from the camera image stream source selected by the image stream selector.

One advantage of the motor vehicle display system is that the motor vehicle display system is able to select an appropriate camera image stream to display. Another advantage is that a driver of the motor vehicle does not have to manually select which camera image stream to display, which may be dangerous if the driver is selecting while driving.

Optionally, the image stream selector is configured to select the camera image stream source from four camera image stream sources based on the vehicular information retrieved, in order to display the camera image stream from the camera image stream source selected by the image stream selector.

One advantage of the motor vehicle display system is that the motor vehicle display system is able to select an appropriate camera image stream to display. Another advantage is that a driver of the motor vehicle does not have to manually select which camera image stream to display, which may be dangerous if the driver is selecting while driving.

Optionally, the image stream selector is configured to select a combination image stream source from the at least two image stream sources based on the vehicular information retrieved, in order to display a combination image stream from the combination image stream source selected by the image stream selector.

One advantage of the motor vehicle display system is that the motor vehicle display system is able to select an appropriate combination image stream to display. Another advantage is that a driver of the motor vehicle does not have to manually select which combination image stream to display, which may be dangerous if the driver is selecting while driving.

The motor vehicle display system may further comprise a display configured to display the image stream from the image stream source selected by the image stream selector.

A motor vehicle may comprise the motor vehicle display system.

Any feature or step disclosed in the context of the first aspect of the invention may also be used, to the extent possible, in combination with and/or in the context of other aspects of the invention, and in the inventions generally. In addition, any feature or step disclosed in the context of any other aspect of the invention may also be used, to the extent possible, in combination with and/or in the context of the first aspect of the invention, and in the inventions generally.

According to a second aspect of the invention, there is provided a motor vehicle display system comprising: a vehicular information retriever configured to retrieve vehicular information of a motor vehicle; an image stream selector configured to select an image stream source from at least two image stream sources based on the vehicular information retrieved, in order to display an image stream from the image stream source selected by the image stream selector; wherein: the vehicular information retriever is configured to retrieve map information; and the image stream selector is configured to select the image stream source from the at least two image stream sources based on the map information retrieved, in order to display the image stream from the image stream source selected by the image stream selector; wherein: the vehicular information retriever is configured to retrieve localisation information of the motor vehicle; and the image stream selector is configured to select the image stream source from the at least two image stream sources based on the localisation information retrieved, in order to display the image stream from the image stream source selected by the image stream selector; wherein: the vehicular information retriever is configured to retrieve vehicular dynamics information of the motor vehicle; and the image stream selector is configured to select the image stream source from the at least two image stream sources based on the vehicular dynamics information retrieved, in order to display the image stream from the image stream source selected by the image stream selector; wherein the image stream selector is configured to select a respective portion of each image from the image stream from the image stream source selected by the image stream selector, in order to display the respective portion of each image from the image stream from the image stream source selected by the image stream selector; wherein the image stream selector is configured to select a camera image stream source from four camera image stream sources based on the vehicular information retrieved, in order to display the camera image stream from the camera image stream source selected by the image stream selector; wherein the image stream selector is configured to select a combination image stream source from the at least two image stream sources based on the vehicular information retrieved, in order to display a combination image stream from the combination image stream source selected by the image stream selector; and a display configured to display the image stream from the image stream source selected by the image stream selector.

One advantage of the motor vehicle display system is that the motor vehicle display system is able to select an appropriate image stream to display. Another advantage is that a driver of the motor vehicle does not have to manually select which image stream to display, which may be dangerous if the driver is selecting while driving.

Moreover, the motor vehicle display system is distinguishable from a device that is configured to display an image stream from a rear camera when a reverse gear is engaged. In fact, the device is not configured to select one image stream from a possible multiple image streams but is programmed to display the image stream from the rear camera when the reverse gear is engaged.

Any feature or step disclosed in the context of the second aspect of the invention may also be used, to the extent possible, in combination with and/or in the context of other aspects of the invention, and in the inventions generally. In addition, any feature or step disclosed in the context of any other aspect of the invention may also be used, to the extent possible, in combination with and/or in the context of the second aspect of the invention, and in the inventions generally.

According to a third aspect of the invention, there is provided a motor vehicle display method comprising the acts of: retrieving vehicular information of a motor vehicle; and selecting an image stream source from at least two image stream sources based on the vehicular information retrieved, in order to display an image stream from the image stream source selected.

One advantage of the motor vehicle display method is that the motor vehicle display method is able to allow an appropriate image stream to be selected in order to be displayed. Another advantage is that a driver of the motor vehicle does not have to manually select which image stream to display, which may be dangerous if the driver is selecting while driving.

Moreover, the motor vehicle display method is distinguishable from a process of displaying an image stream from a rear camera when a reverse gear is engaged. In fact, the process would not involve selecting one image stream from a possible multiple image streams but would involve displaying the image stream from the rear camera when the reverse gear is engaged.

Optionally, the act of retrieving the vehicular information comprises the act of retrieving map information; and the act of selecting the image stream source comprises the act of selecting the image stream source from the at least two image stream sources based on the map information retrieved.

One advantage of the motor vehicle display method is that the motor vehicle display method is able to allow an appropriate image stream to be selected based on map information, in order to be displayed.

Optionally, the act of retrieving the vehicular information comprises the act of retrieving localisation information of the motor vehicle; and the act of selecting the image stream source comprises the act of selecting the image stream source from the at least two image stream sources based on the localisation information retrieved.

One advantage of the motor vehicle display method is that the motor vehicle display method is able to allow an appropriate image stream to be selected based on localisation information, in order to be displayed.

Optionally, the act of retrieving the vehicular information comprises the act of retrieving vehicular dynamics information of the motor vehicle; and the act of selecting the image stream source comprises the act of selecting the image stream source from the at least two image stream sources based on the vehicular dynamics information retrieved.

One advantage of the motor vehicle display method is that the motor vehicle display method is able to allow an appropriate image stream to be selected based on vehicular dynamics information, in order to be displayed.

Optionally, the act of selecting the image stream source comprises the act of selecting a respective portion of each image from the image stream from the image stream source selected, in order to display the respective portion of each image from the image stream from the image stream source selected.

One advantage of the motor vehicle display method is that the motor vehicle display method is able to allow an appropriate portion of each image from the image stream to be selected in order to be displayed.

Optionally, the act of selecting the image stream source comprises the act of selecting a camera image stream source from at least two camera image stream sources based on the vehicular information retrieved, in order to display a camera image stream from the camera image stream source selected.

One advantage of the motor vehicle display method is that the motor vehicle display method is able to allow an appropriate camera image stream to be selected in order to be displayed. Another advantage is that a driver of the motor vehicle does not have to manually select which image stream to display, which may be dangerous if the driver is selecting while driving.

Optionally, the act of selecting the image stream source comprises the act of selecting the camera image stream source from four camera image stream sources based on the vehicular information retrieved, in order to display the camera image stream from the camera image stream source selected.

One advantage of the motor vehicle display method is that the motor vehicle display method is able to allow an appropriate camera image stream to be selected in order to be displayed. Another advantage is that a driver of the motor vehicle does not have to manually select which image stream to display, which may be dangerous if the driver is selecting while driving.

Optionally, the act of selecting the image stream source comprises the act of selecting a combination image stream source from the at least two image stream sources based on the vehicular information retrieved, in order to display a combination image stream from the combination image stream source selected.

One advantage of the motor vehicle display method is that the motor vehicle display method is able to allow a combination image stream to be selected in order to be displayed.

The motor vehicle display method may further comprise the act of displaying the image stream retrieved from the image stream source selected.

Any feature or step disclosed in the context of the third aspect of the invention may also be used, to the extent possible, in combination with and/or in the context of other aspects of the invention, and in the inventions generally. In addition, any feature or step disclosed in the context of any other aspect of the invention may also be used, to the extent possible, in combination with and/or in the context of the third aspect of the invention, and in the inventions generally.

According to a fourth aspect of the invention, there is provided a motor vehicle display method comprising the acts of: retrieving vehicular information of a motor vehicle; and selecting an image stream source from at least two image stream sources based on the vehicular information retrieved, in order to display an image stream from the image stream source selected; wherein: the act of retrieving the vehicular information comprises the act of retrieving map information; and the act of selecting the image stream source comprises the act of selecting the image stream source from the at least two image stream sources based on the map information retrieved; wherein: the act of retrieving the vehicular information comprises the act of retrieving localisation information of the motor vehicle; and the act of selecting the image stream source comprises the act of selecting the image stream source from the at least two image stream sources based on the localisation information retrieved; wherein: the act of retrieving the vehicular information comprises the act of retrieving vehicular dynamics information of the motor vehicle; and the act of selecting the image stream source comprises the act of selecting the image stream source from the at least two image stream sources based on the vehicular dynamics information retrieved; wherein the act of selecting the image stream source comprises the act of selecting a respective portion of each image from the image stream from the image stream source selected, in order to display the respective portion of each image from the image stream from the image stream source selected; wherein the act of selecting the image stream source comprises the act of selecting a camera image stream source from four camera image stream sources based on the vehicular information retrieved, in order to display the camera image stream from the camera image stream source selected; wherein the act of selecting the image stream source comprises the act of selecting a combination image stream source from the at least two image stream sources based on the vehicular information retrieved, in order to display a combination image stream from the combination image stream source selected; and displaying the image stream retrieved from the image stream source selected.

One advantage of the motor vehicle display method is that the motor vehicle display method is able to allow an appropriate image stream to be selected in order to be displayed. Another advantage is that a driver of the motor vehicle does not have to manually select which image stream to display, which may be dangerous if the driver is selecting while driving.

Moreover, the motor vehicle display method is distinguishable from a process of displaying an image stream from a rear camera when a reverse gear is engaged. In fact, the process would not involve selecting one image stream from a possible multiple image streams but would involve displaying the image stream from the rear camera when the reverse gear is engaged.

Any feature or step disclosed in the context of the fourth aspect of the invention may also be used, to the extent possible, in combination with and/or in the context of other aspects of the invention, and in the inventions generally. In addition, any feature or step disclosed in the context of any other aspect of the invention may also be used, to the extent possible, in combination with and/or in the context of the fourth aspect of the invention, and in the inventions generally.

In this summary, in the description below, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the inventions generally.

In this summary, in the description below, in the claims below, and in the accompanying drawings, where reference is made herein to a method comprising two or more defined steps, the defined steps can be carried out in any order or simultaneously (except where the context excludes that possibility), and the method can include one or more other steps which are carried out before any of the defined steps, between two of the defined steps, or after all the defined steps (except where the context excludes that possibility).

As used in this summary, in the description below, in the claims below, and in the accompanying drawings, the term "comprises" and grammatical equivalents thereof are used herein to mean that other components, ingredients, steps, et cetera are optionally present. For example, an article "comprising" (or "which comprises") components A, B, and C can consist of (that is, contain only) components A, B, and C, or can contain not only components A B, and C but also one or more other components.

As used in this summary, in the description below, in the claims below, and in the accompanying drawings, the term "at least" followed by a number is used in to denote the start of a range beginning with that number (which may be a range having an upper limit or no upper limit, depending on the variable being defined) . For example, "at least 1" means 1 or more than 1. The term "at most" followed by a number is used herein to denote the end of a range ending with that number (which may be a range having 1 or 0 as its lower limit, or a range having no lower limit, depending on the variable being defined) . For example, "at most 4" means 4 or less than 4, and "at most 40%" means 40% or less than 40%. When, in this specification, a range is given as "(a first number) to (a second number)" or "(a first number) - (a second number) ", this means a range whose lower limit is the first number and whose upper limit is the second number. For example, 25 to 100 mm means a range whose lower limit is 25 mm, and whose upper limit is 100 mm.

As used in this summary, in the description below, in the claims below, and in the accompanying drawings, the term "volatile memory" means any type of computer memory where the contents of the memory are lost if there is no power to the computer. Random-access memory (RAM) is an example of a type of volatile memory. As used in the summary above, in this description, in the claims below, and in the accompanying drawings, the term "nonvolatile memory" or the term "non-transitory computer-readable medium" means any type of computer memory where the contents of the memory are retained even if there is no power to the computer. Hard disk and solid-state drive (SSD) are examples of types of nonvolatile memory or non-transitory computer-readable medium.

### BRIEF DESCRIPTION OF THE DRAWINGS

These and other features, aspects, and advantages will become better understood with regard to the following description, appended claims, and accompanying drawings where:
Figure 1 shows a motor vehicle display system;
Figure 2 shows a motor vehicle comprising the motor vehicle display system of Figure 1; and
Figure 3 shows a diagram for a motor vehicle display method.

In the drawings, like parts are denoted by like reference numerals.

### DESCRIPTION

In the summary above, in this description, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the inventions generally.

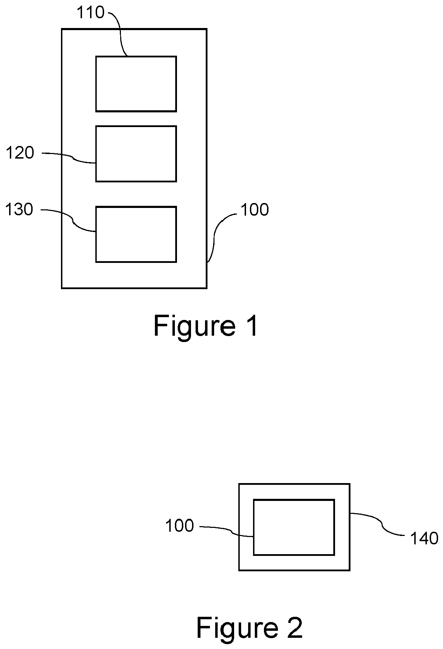

Figure 1 shows a motor vehicle display system 100 comprising a vehicular information retriever 110 and an image stream selector 120. The motor vehicle display system 100 may further comprise a display 130. The motor vehicle display system 100 may comprise software, hardware or a combination of software and hardware.

The vehicular information retriever 110 is configured to retrieve vehicular information of a motor vehicle. The vehicular information may comprise at least one of map information, localisation information or vehicular dynamics information.

The vehicular information retriever 110 is configured to retrieve the map information. The map information may comprise static map information comprising information on physical objects such as buildings, roads, traffic lights, road signs and petrol stations, and dynamic map information comprising information on roadworks, accidents and the weather.

The vehicular information retriever 110 is configured to retrieve the localisation information of the motor vehicle. The localisation information may comprise location and time information retrieved from a satellite navigation system, for example, a global positioning system (GPS) based satellite navigation system. The localisation information may also comprise direction information retrieved from a compass.

The vehicular information retriever 110 is configured to retrieve vehicular dynamics information of the motor vehicle. The vehicular dynamics information may comprise data about the motor vehicle, such as at least one of a steer angle, a wheel rotation speed, the motor vehicle's speed, the motor vehicle's acceleration (linear or lateral), the motor vehicle's rotation rate on its longitudinal axis, transverse axis or yaw axis, a chassis height, an indicator, an engine, a suspension system, a transmission system. The vehicular dynamics information may also comprise sensor data from sensors such as parking sensors or obstacles detection sensors.

The vehicular information retriever 110 may comprise software, hardware or a combination of software and hardware.

The image stream selector 120 is configured to select an image stream source from at least two image stream sources based on the vehicular information retrieved. Hence, the image stream selector 120 may be configured to select an image stream source from at least two image stream sources based on at least one of the map information retrieved, the localisation information retrieved or the vehicular dynamics information retrieved.

An image stream source may provide an image stream that may be displayed on the display 130. An image stream source may comprise any suitable source of an image stream of images of an environment of a motor vehicle. An image stream source may be a camera image stream source, such as a front camera directed outwards from a front of the motor vehicle, a rear camera directed outwards from a rear of the motor vehicle, a left camera directed outwards from a left side of the motor vehicle and a right camera directed outwards from a right side of the motor vehicle. In fact, an image stream source may not be comprised in the motor vehicle itself, for example, a V2X image stream source or an image stream source comprised in a trailer. An image stream source may also be a combination image stream source, such as a multiple camera system that is configured to combine or stitch at least two images together to form a combination image. A combination image stream source may be a surround view system that is configured to combine or stitch images obtained at a particular moment in time from a front camera, a rear camera, a left camera and a right camera together to form a combination image. The combination image stream may then provide a combination image stream to be displayed on the display 130.

The image stream selector 120 is configured to select an image stream source from at least two image stream sources. The image stream selector 120 may select a camera image stream source from at least two camera image stream sources. The image stream selector 120 may also select a camera image stream source from four camera image stream sources, such as a front camera of the motor vehicle, a rear camera of the motor vehicle, a left camera of the motor vehicle or a right camera of the motor vehicle that together are comprised in a surround view system. In fact, the image stream selector 120 may further select a camera image stream source from a camera image stream source not comprised in the motor vehicle, for example, a V2X camera image stream source or a camera image stream source comprised in a trailer. Further, the image stream selector 120 may select a combination image stream source from at least two image stream sources. Furthermore, the image stream selector 120 may select a respective portion of each image or each combination image from an image stream from an image stream source selected by the image stream selector 120, in order to display the respective portion of each image or each combination image from the image stream from the image stream source selected by the image stream selector 120 on the display 130.

The image stream selector 120 may comprise software, hardware or a combination of software and hardware.

The display 130 is configured to display an image stream from an image stream source selected by the image stream selector 120. The display 130 may, for example, be a human user interface comprised in a dashboard of the motor vehicle. The display 130 may comprise software, hardware or a combination of software and hardware.

Figure 2 shows a motor vehicle 140, such as a car, comprising the motor vehicle display system 100.

One advantage of the motor vehicle display system 100 is that the motor vehicle display system 100 is able to select an appropriate image stream to display. Another advantage is that a driver of the motor vehicle 140 does not have to manually select which image stream to display, which may be dangerous if the driver is selecting while driving.

Moreover, the motor vehicle display system 100 is distinguishable from a device that is configured to display an image stream from a rear camera when a reverse gear is engaged. In fact, the device is not configured to select one image stream from a possible multiple image streams but is programmed to display the image stream from the rear camera when the reverse gear is engaged.

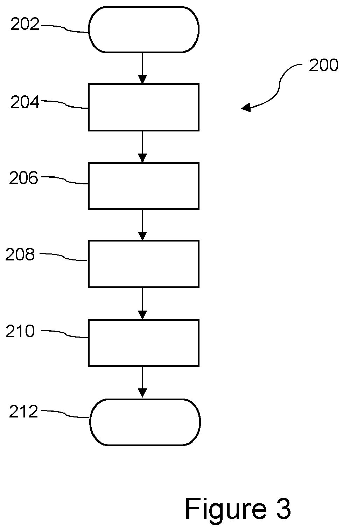

Figure 3 shows a diagram for a motor vehicle display method 200 using the motor vehicle display system 100.

At step 202, the motor vehicle display method 200 initialises. At step 204, the vehicular information retriever 110 retrieves vehicular information of the motor vehicle 140. The vehicular information of the motor vehicle 140 may comprise at least one of map information, localisation information or vehicular dynamics information. For instance, the vehicular information retrieved may indicate that there is a building in front of the motor vehicle 140 and the motor vehicle 140 is facing a dead end. Alternatively, the vehicular information retrieved may indicate that the motor vehicle 140 has reached a T-junction, and thus the motor vehicle 140 may either turn left or turn right.

At step 206, at least two image stream sources obtain images of an environment of the motor vehicle 140. The at least two image stream sources may comprise at least one camera image stream source, such as a front camera of the motor vehicle 140, a rear camera of the motor vehicle 140, a left camera of the motor vehicle 140 or a right camera of the motor vehicle 140 or at least one combination image stream source, such as a surround view system.

At step 208, the image stream selector 120 selects an image stream source from the at least two image stream sources based on the vehicular information retrieved. For example, if the motor vehicle 140 is facing a dead end and the only way out of the dead-end street is to reverse, the image stream selector 120 may select an image stream from the rear camera of the motor vehicle 140 to be displayed on the display 130. Alternatively, if the motor vehicle 140 has reached a T-junction and traffic from left and right of the motor vehicle 140 may be monitored, the image stream source selected may be a combination image stream source, wherein the combination image stream source selected may combine a portion of each image from the left camera with a portion of each image from the right camera to form a respective combination image. Hence, the combination image stream source selected may provide a combination image stream to be displayed on the display 130.

At step 210, an image stream from the image stream source selected is displayed on the display 130.

Finally, at step 212, the motor vehicle display method 200 ends.

One advantage of the motor vehicle display method 200 is that the motor vehicle display method 200 is able to allow an appropriate image stream to be selected in order to be displayed. Another advantage is that a driver of the motor vehicle 140 does not have to manually select which image stream to display, which may be dangerous if the driver is selecting while driving.

Moreover, the motor vehicle display method 200 is distinguishable from a process of displaying an image stream from a rear camera when a reverse gear is engaged. In fact, the process would not involve selecting one image stream from a possible multiple image streams but would involve displaying the image stream from the rear camera when the reverse gear is engaged.

Although the invention has been described in considerable detail with reference to certain embodiments or aspects, other embodiments or aspects are possible.

Therefore, the spirit and scope of the appended claims should not be limited to the description of the embodiments contained herein.

For example, the step of obtaining images of step 206 may be performed before the step of retrieving vehicular information of step 204.

All features disclosed in this specification (including the appended claims, abstract, and accompanying drawings) may be replaced by alternative features serving the same, equivalent, or similar purpose, unless expressly stated otherwise. Thus, unless expressly stated otherwise, each feature disclosed is one example only of a generic series of equivalent or similar features.

## Claims

1. A motor vehicle display system (100) comprising:
a vehicular information retriever (110) configured to retrieve vehicular information of a motor vehicle (140); and
an image stream selector (120) configured to select an image stream source from at least two image stream sources based on the vehicular information retrieved, in order to display an image stream from the image stream source selected by the image stream selector (120).

2. The motor vehicle display system (100) as in claim 1, wherein:
the vehicular information retriever (110) is configured to retrieve map information; and
the image stream selector (120) is configured to select the image stream source from the at least two image stream sources based on the map information retrieved, in order to display the image stream from the image stream source selected by the image stream selector (120).

3. The motor vehicle display system (100) as in any one of the preceding claims, wherein:
the vehicular information retriever (110) is configured to retrieve localisation information of the motor vehicle (140) ; and
the image stream selector (120) is configured to select the image stream source from the at least two image stream sources based on the localisation information retrieved, in order to display the image stream from the image stream source selected by the image stream selector (120).

4. The motor vehicle display system (100) as in any one of the preceding claims, wherein:
the vehicular information retriever (110) is configured to retrieve vehicular dynamics information of the motor vehicle (140); and
the image stream selector (120) is configured to select the image stream source from the at least two image stream sources based on the vehicular dynamics information retrieved, in order to display the image stream from the image stream source selected by the image stream selector (120).

5. The motor vehicle display system (100) as in any one of the preceding claims, wherein the image stream selector (120) is configured to select a respective portion of each image from the image stream from the image stream source selected by the image stream selector (120), in order to display the respective portion of each image from the image stream from the image stream source selected by the image stream selector (120).

6. The motor vehicle display system (100) as in any one of the preceding claims, wherein the image stream selector (120) is configured to select a camera image stream source from at least two camera image stream sources based on the vehicular information retrieved, in order to display a camera image stream from the camera image stream source selected by the image stream selector (120).

7. The motor vehicle display system (100) of claim 6, wherein the image stream selector (120) is configured to select the camera image stream source from four camera image stream sources based on the vehicular information retrieved, in order to display the camera image stream from the camera image stream source selected by the image stream selector (120).

8. The motor vehicle display system (100) as in any one of the preceding claims, wherein the image stream selector (120) is configured to select a combination image stream source from the at least two image stream sources based on the vehicular information retrieved, in order to display a combination image stream from the combination image stream source selected by the image stream selector (120).

9. The motor vehicle display system (100) as in any one of the preceding claims, further comprising a display (130) configured to display the image stream from the image stream source selected by the image stream selector (120).

10. A motor vehicle (140) comprising the motor vehicle display system (100) of any one of the preceding claims.

11. A motor vehicle display system (100) as in any one of the preceding claims, comprising:
a vehicular information retriever (110) configured to retrieve vehicular information of a motor vehicle (140);
an image stream selector (120) configured to select an image stream source from at least two image stream sources based on the vehicular information retrieved, in order to display an image stream from the image stream source selected by the image stream selector (120);
wherein:
the vehicular information retriever (110) is configured to retrieve map information; and
the image stream selector (120) is configured to select the image stream source from the at least two image stream sources based on the map information retrieved, in order to display the image stream from the image stream source selected by the image stream selector (120);
wherein:
the vehicular information retriever (110) is configured to retrieve localisation information of the motor vehicle (140); and
the image stream selector (120) is configured to select the image stream source from the at least two image stream sources based on the localisation information retrieved, in order to display the image stream from the image stream source selected by the image stream selector (120);
wherein:
the vehicular information retriever (110) is configured to retrieve vehicular dynamics information of the motor vehicle (140); and
the image stream selector (120) is configured to select the image stream source from the at least two image stream sources based on the vehicular dynamics information retrieved, in order to display the image stream from the image stream source selected by the image stream selector (120);
wherein the image stream selector (120) is configured to select a respective portion of each image from the image stream from the image stream source selected by the image stream selector (120), in order to display the respective portion of each image from the image stream from the image stream source selected by the image stream selector (120);
wherein the image stream selector (120) is configured to select a camera image stream source from four camera image stream sources based on the vehicular information retrieved, in order to display the camera image stream from the camera image stream source selected by the image stream selector (120);
wherein the image stream selector (120) is configured to select a combination image stream source from the at least two image stream sources based on the vehicular information retrieved, in order to display a combination image stream from the combination image stream source selected by the image stream selector (120); and
a display (130) configured to display the image stream from the image stream source selected by the image stream selector (120) .

12. A motor vehicle display method comprising the acts of:
retrieving vehicular information of a motor vehicle (140); and
selecting an image stream source from at least two image stream sources based on the vehicular information retrieved, in order to display an image stream from the image stream source selected.

13. A motor vehicle display method comprising the acts of:
retrieving vehicular information of a motor vehicle (140); and
selecting an image stream source from at least two image stream sources based on the vehicular information retrieved, in order to display an image stream from the image stream source selected;
wherein:
the act of retrieving the vehicular information comprises the act of retrieving map information; and
the act of selecting the image stream source comprises the act of selecting the image stream source from the at least two image stream sources based on the map information retrieved;
wherein:
the act of retrieving the vehicular information comprises the act of retrieving localisation information of the motor vehicle (140); and
the act of selecting the image stream source comprises the act of selecting the image stream source from the at least two image stream sources based on the localisation information retrieved;
wherein:
the act of retrieving the vehicular information comprises the act of retrieving vehicular dynamics information of the motor vehicle (140); and
the act of selecting the image stream source comprises the act of selecting the image stream source from the at least two image stream sources based on the vehicular dynamics information retrieved;
wherein the act of selecting the image stream source comprises the act of selecting a respective portion of each image from the image stream from the image stream source selected, in order to display the respective portion of each image from the image stream from the image stream source selected;
wherein the act of selecting the image stream source comprises the act of selecting a camera image stream source from four camera image stream sources based on the vehicular information retrieved, in order to display the camera image stream from the camera image stream source selected;
wherein the act of selecting the image stream source comprises the act of selecting a combination image stream source from the at least two image stream sources based on the vehicular information retrieved, in order to display a combination image stream from the combination image stream source selected; and
displaying the image stream retrieved from the image stream source selected.
